# FASCICULE DE BREVET EUROPEEN

(11) **EP 1 294 645 B1**
(45) Date de publication et mention de la délivrance du brevet: **17.08.2005**
(21) Numéro de dépôt: 00935432.5
(22) Date de dépôt: 21.06.2000
(51) Int. Cl.: C02F 9/00, C02F 1/68, C02F 1/52, C01G 49/00, C01B 17/22

(54) **PROCEDE PHYSICO-CHIMIQUE D'ELIMINATION DES METAUX LOURDS, TOXIQUES ET/OU PRECIEUX CONTENUS DANS LES BOUES URBAINES, INDUSTRIELLES ET LES LISIERS D'ANIMAUX**
VERFAHREN ZUR PHYSIKALISCH-CHEMISCHEN ENTFERNUNG VON TOXISCHEN-, EDEL- UND/ODER SCHWERMETALLIONEN, AUS STÄDTISCHEN-, INDUSTRIESCHLÄMMEN ODER AUS GÜLLE
PHYSICO-CHEMICAL METHOD FOR ELIMINATING TOXIC AND/OR PRECIOUS HEAVY METALS CONTAINED IN URBAN, INDUSTRIAL SLUDGE AND LIQUID ANIMAL MANURE

(43) Date de publication de la demande: 26.03.2003
(73) Titulaire: Der Stepanian, Manouk, 1807 Blonay (CH); Assoun, Christian, 1701 Fribourg (CH)
(72) Inventeur: Der Stepanian, Manouk, 1807 Blonay (CH); Assoun, Christian, 1701 Fribourg (CH)
(74) Mandataire: Gresset, Jean
(86) Numéro de dépôt international: PCT/IB2000/000820
(87) Numéro de publication internationale: WO 2001/098217

(56) Documents cités:
- EP-A- 0 773 192
- US-A- 4 260 491
- US-A- 4 428 840
- US-A- 5 665 324

## Description

La présente invention se rapporte à un procédé physico-chimique d'élimination des métaux lourds, toxiques et/ou précieux contenus dans les boues urbaines, industrielles et les lisiers d'animaux. Il concerne plus particulièrement les boues dans lesquels les métaux sont en suspension dans une solution aqueuse et forment ensemble une masse à traiter. L'élimination de telles boues pose de sérieux problèmes, car certains oxydes métalliques peuvent être gravement préjudiciables à la santé tant de l'homme que des animaux. Le but de la présente invention est de proposer un tel procédé qui soit particulièrement efficace et de coût modéré.

Selon l'invention, le procédé est caractérisé en ce qu'il comporte les opérations suivantes:
■ mélange avec la masse de FeCl₃ jusqu'à obtenir un pH acide de la solution,
■ mélange avec la masse de (CO₂H)₂ et de NH₄Cl jusqu'à former des pro-chélates métalliques,
■ mélange avec la masse de sulfures mixtes alcalins jusqu'à obtenir une solution présentant un pH très basique, pour former des chélates complexes colloïdaux de fer, qui piègent lesdits métaux,
■ neutralisation de la solution par adjonction d'un acide, jusqu'à provoquer la précipitation de sulfures alcalino-ferreux et des hydroxydes contenant lesdits métaux,
■ formation par centrifugation, à partir de la masse, d'une phase liquide et d'une phase solide, ladite phase solide contenant lesdits sulfures alcalino-ferreux.

Ce procédé s'est révélé particulièrement intéressant lorsque le sulfure mixte alcalin est réalisé à partir des opérations suivantes:
■ mélange en quantités sensiblement égales de NaOH et de KOH sous forme de granules anhydres,
■ adjonction au mélange de soufre en fleur, dans une proportion comprise entre 5 et 10 % pondéral,
■ mélange jusqu'à adhérence du soufre sur les granules,
■ adjonction d'eau au mélange, dans une proportion comprise entre 3 et 20 % jusqu'à obtenir une réaction exothermique et la dissolution des granules, formant ainsi un liquide.

De manière avantageuse, le mélange obtenu est dissout dans 1 à 3 fois son volume d'eau.

Pour que le procédé se déroule dans les meilleures conditions possibles, il est nécessaire que la masse soit homogène. C'est pourquoi les opérations de mélange de cette masse s'effectue avec application simultanée d'ultrasons.

La séparation de l'eau et des résidus solides se fait de manière efficace et économique par centrifugation au moyen d'un décanteur séparateur centrifuge.

Il va de soit que la phase solide, qui contient les métaux, doit être traitée avec la plus grande attention, certains d'entre eux présentant une grande toxicité. Une solution consiste à stocker cette phase solide dans des conditions particulières, permettant d'éviter toute pollution. Une autre solution, permettant de résoudre le problème de manière plus écologique et efficace, consiste à séparer les métaux de la phase solide. A cet effet, cette dernière est introduite sous forme de poudre, dans un réacteur à plasma, en présence d'un gaz choisi parmi l'azote et l'argon, pour éliminer les composés organiques et réduire les métaux contenus dans la phase solide.

Il se peut que la phase liquide résultante de la centrifugation contienne encore quelques ions métalliques, notamment de métaux précieux. Afin d'extraire des boues la totalité des métaux, du NH₄OH est ajouté à la phase liquide pour former des hydroxydes métalliques à partir des chlorures métalliques que comporte encore cette phase. Les hydroxydes sont, ensuite, extraits par centrifugation.

D'autres avantages et caractéristiques de l'invention ressortiront de la description qui va suivre, faite en regard du dessin annexé, dans lequel la figure unique représente, de manière schématique, les différentes étapes du procédé selon l'invention.

Les boues destinées à être traitées par le procédé selon l'invention peuvent provenir aussi bien d'un bassin de décantation destiné à traiter les eaux usées, représenté en 10, d'une usine 12 ou d'une fosse d'exploitation agricole 14. Ces boues peuvent être ou non stockées dans un bassin 16.

Le procédé selon l'invention nécessite la mise en oeuvre de deux cuves à ultrasons 18 et 20, deux mélangeurs 22 et 24, un décanteur séparateur centrifuge 26, un bac de récupération 27 , une broyeuse 28 et un réacteur à plasma 30. Il est, en outre, nécessaire de connaître les concentrations des différents métaux contenus dans les boues, afin de choisir et de doser les réactifs. A cet effet, il est fait appel à des techniques de spectrométrie et/ou de chromatographie de masse, les appareils utilisés à cet effet étant schématiquement représentés en 32.

Le réacteur à plasma 30 comporte une pompe 34 et plusieurs enceintes, soit une enceinte 38 d'homogénéisation à plasmas primaire et secondaire puis une enceinte principale 40 destinée au traitement thermique à proprement parlé.

Dans la description qui va suivre, les volumes de boues mis en jeux sont de l'ordre de un à quelques mètres cubes. Il est, bien sûr, évident que les quantités traitées peuvent varier dans des limites considérables sans que cela ne pose problème, les principes énoncés restant, pour l'essentiel, les mêmes.

Les boues à traiter commencent par faire l'objet d'une analyse, au moyen de l'installation 32, pour connaître l'essentiel de sa composition, et plus particulièrement la présence de matériaux dangereux, notamment des matériaux métalliques ou organiques. La connaissance de la composition des boues permet de prévoir la manière dont elles seront traitées au fur et à mesure du processus.

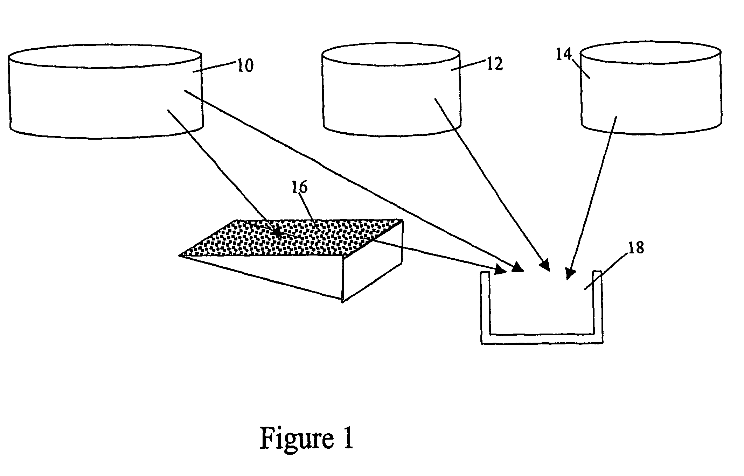

Comme le montre la figure 1, les boues sont, tout d'abord, introduites dans la cuve 18, et soumises à de vibrations par rayonnement ultrasonore, de manière à homogénéiser la masse qu'elles forment. Si nécessaire, de l'eau sera ajoutée à cette masse, de manière à obtenir, dans un délai raisonnable qui de l'ordre de 10 à 60 minutes, une masse formée de micro-particules de boues en suspension dans l'eau.

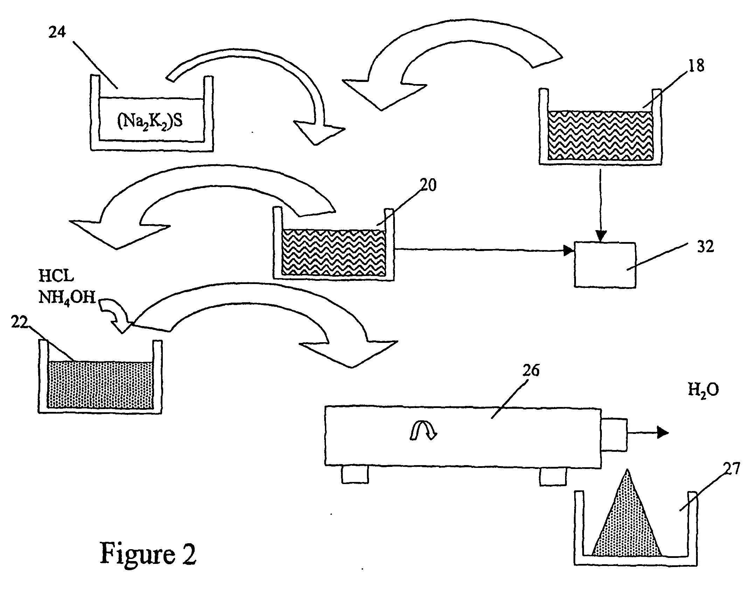

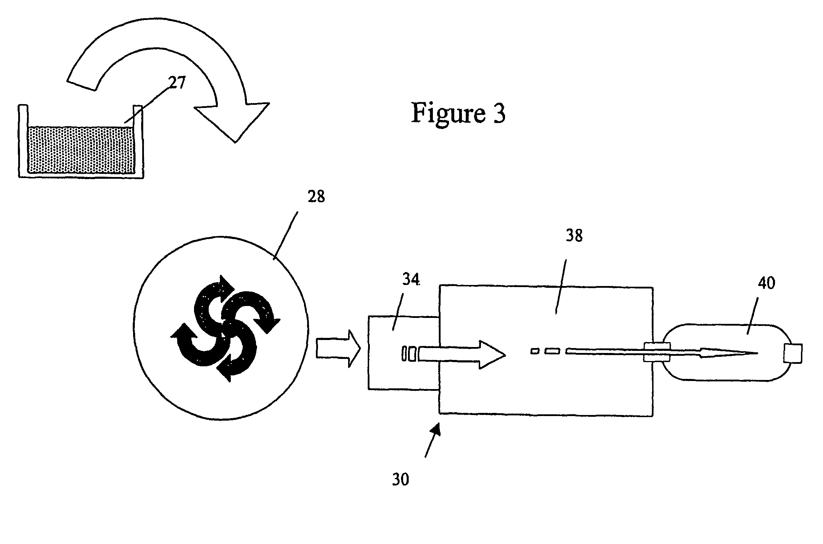

Durant cette opération, représentée à la figure 2, l'acidité de la masse est ajusté par adjonction de FeCl₃, jusqu'à obtenir un pH compris entre 4,5 et 6,7 environ, tout en veillant à ce que la température de la masse ne dépasse pas 60°C. Typiquement, la quantité de FeCl₃ ajoutée est sensiblement égale à un tiers du volume initial de boues.

Lorsque la masse est homogène, celle-ci est complétée avec environ 2% volumique de NH₄Cl et 2% volumique de (CO₂H)₂. Cette adjonction a pour effet qu'il se forme des pro-chélates de métaux lourds, et/ou précieux, à cause du pH acide de la masse.
La masse, ainsi obtenue, est transférée dans la seconde cuve 20, à laquelle est ajouté 10 à 30% volumique de sulfures mixtes alcalins, obtenus par un procédé qui sera décrit plus loin. Cette adjonction a pour effet qu'il se forme des chélates complexes colloïdaux de fer, qui piègent les métaux lourds ainsi que les métaux facilement complexés par le soufre. De plus, le pH de la masse devient très basique, atteignant une valeur comprise entre 11 et 12. Cette opération dure 20 à 30 minutes environ.
Lorsque celle-ci est terminée, la masse est traitée avec une solution de HCl à faible concentration (5 à 10 mol/l), jusqu'à provoquer la coprécipitation des sulfures alcalino-ferreux et des hydroxydes. Le dosage correcte de HCl correspond à un excès de 5 à 7%. Pour atteindre la précision voulue, le pH est suivi, de manière automatique, au moyen des équipements bien connus de l'homme du métier. La pratique a montré que, si les boues sont riches en métaux précieux, il peut être intéressant d'ajouter, à l'acide chlorhydrique, une faible quantité de NH₄Cl, de (CO₂H)₂ et/ou de glucose.

Cette précipitation des sulfures et des hydroxydes a pour effet d'extraire de la solution la plupart des métaux qu'elle contient initialement.

La masse est ensuite transférée dans le décanteur 26, par exemple du type comprenant une vis sans fin, pour la séparer en deux phases, l'une liquide, l'autre solide.

La phase liquide, légèrement acide est une eau quasiment propre, susceptible d'être utilisée pour des usages courants, par exemple pour diluer les boues en début de processus. Dans certains cas, il se peut que la solution liquide contienne encore des métaux précieux. Il est alors possible de la traiter par un ajout de NH₄OH qui réagit avec les chlorures métalliques pour former des hydroxydes qui précipitent et qui peuvent, alors, être extraits par centrifugation.

La phase solide est introduite par la pompe 34 dans le réacteur 30, après avoir été pulvérisée et séchée au moyen du broyeur 28. La poudre ainsi obtenue est introduite dans l'enceinte 38 et entraînée par un flux de gaz, choisi parmi l'argon et l'azote. Cette opération permet d'assurer une homogénéisation. Le flux est ensuite entraîné dans l'enceinte principale 40, dans laquelle la température est typiquement comprise entre 6000 et 8000°C. A cette température, les composés organiques sont totalement dissociés. Le traitement thermique ainsi réalisé permet, en outre, de réduire les métaux contenus dans la phase solide.

Il va de soit que les gaz sortant du réacteur à plasma doivent faire l'objet de filtration, afin d'éviter l'émission de SO₂ ou de CO par exemple. A cet effet, des pièges de type KOH peuvent avantageusement être utilisés.

Comme expliqué plus haut, les sulfures mixtes alcalins sont préparés d'une manière particulière, au moyen du mélangeur 24, à partir de bases sodique NaOH et potassique KOH en granules et de soufre en fleur, tous trois de qualité technique, qui sont mélangés durant quelques minutes. Lorsque le soufre adhère bien aux granules, quelques litres d'eau sont ajoutés au mélange. Cette réaction est fortement exothermique. Toute la masse se transforme en un liquide noir et bouillant, qui est malaxé tant que la réaction n'est pas terminée. Après s'être assuré que toutes les granules sont dissoutes et que la masse obtenue s'est refroidie jusqu'à une température d'environ 80°C, il est ajouté deux fois son volume d'eau courante. Les sulfures mixtes ainsi préparés peuvent, sans autre être utilisés lors du processus décrit ci-dessus.

Dans une variante qui n'a pas été représentée, il est possible d'extraire les métaux par voie chimique. A cet effet, à la sortie du décanteur, la phase solide est formée d'un mélange de matériaux organiques et non organiques, essentiellement des hydroxydes, qui peuvent, de manière classique, être extraits des composés organiques, par un bain acide.

De leur côté, les composés organiques peuvent être utilisés comme ajouts agrochimiques.

## Revendications

1. Procédé d'épuration de boues, supposées contenir des métaux lourds, toxiques et/ou précieux en vue de les extraire, en suspension dans une solution aqueuse et formant ensemble une masse à traiter, **caractérisé en ce qu'**il comporte les opérations suivantes:
■ mélange avec la masse de FeCl₃ jusqu'à obtenir un pH acide de la solution,
■ mélange avec la masse de (CO₂H)₂ et de NH₄Cl jusqu'à former des pro-chélates métalliques,
■ mélange avec la masse de sulfures mixtes alcalins jusqu'à obtenir une solution présentant un pH très basique, pour former des chélates complexes colloïdaux de fer, qui piègent lesdits métaux,
■ neutralisation de la solution par adjonction d'un acide, jusqu'à provoquer la précipitation de sulfures alcalino-ferreux et des hydroxydes contenant lesdits métaux,
■ formation par centrifugation, à partir de la masse, d'une phase liquide et d'une phase solide, ladite phase solide contenant lesdits sulfures alcalino-ferreux

2. Procédé selon la revendication 1, **caractérisé en ce que** ledit sulfure mixte alcalin, est réalisé à partir des opérations suivantes:
■ mélange en quantités sensiblement égales de NaOH et de KOH sous forme de granules anhydres,
■ adjonction au mélange de soufre en fleur, dans une proportion comprise entre 5 et 10 % pondéral,
■ mélange jusqu'à adhérence du soufre sur les granules,
■ adjonction d'eau au mélange, dans une proportion comprise entre 3 et 20 % jusqu'à obtenir une réaction exothermique et la dissolution des granules.

3. Procédé selon la revendication 2, **caractérisé en ce que** ce que le mélange obtenu est dissout dans 1 à 3 fois son volume d'eau.

4. Procédé selon l'une des revendications 1 à 3, **caractérisé en ce que** les opérations de mélange de ladite masse s'effectue en présence d'ultrasons.

5. Procédé selon l'une des revendications 1 à 4, **caractérisé en ce que** l'extraction par centrifugation s'effectue au moyen d'un décanteur séparateur centrifuge.

6. Procédé selon la revendication 5, **caractérisé en ce que** ladite phase solide est, ensuite, introduite sous forme de poudre, dans un réacteur à plasma, en présence d'un gaz choisi parmi l'azote et l'argon, pour éliminer le composés organiques et réduire les métaux contenus dans ladite phase.

7. Procédé selon l'une des revendications 5 ou 6, **caractérisé en ce que** du NH₄OH est ajouté à ladite phase liquide pour former des hydroxydes métalliques à partir des chlorures métalliques que comporte ladite phase liquide, lesdits hydroxydes étant, ensuite, extraits par centrifugation.

## Patentansprüche

1. Verfahren zur Reinigung von Schlämmen, von denen angenommen wird, dass sie toxische Schwermetalle und/oder Edelmetalle enthalten, um sie zu extrahieren, die in einer wässerigen Lösung suspendiert sind und zusammen eine zu behandelnde Masse bilden, **dadurch gekennzeichnet, dass** es die folgenden Arbeitsgänge umfasst:
- Mischen mit der Masse an FeCl₃ bis zur Erzielung eines sauren pH der Lösung,
- Mischen mit der Masse an (CO₂H)₂ und NH₄Cl bis zur Bildung von Metallprochelaten,
- Mischen mit der Masse an Alkalimischsulfiden bis zur Erzielung einer Lösung mit einem hochbasischen pH zur Bildung von kolloidalen komplexen Eisenchelaten, welche die Metalle einfangen,
- Neutralisierung der Lösung durch Zugabe einer Säure, um die Alkalieisen(II)-sulfide und die genannten Metalle enthaltenden Hydroxide auszufällen und
- Bildung einer Flüssig- und einer Festphase ausgehend von der Masse durch Zentrifugieren, wobei die Festphase die genannten Alkalieisen(II)-sulfide enthält.

2. Verfahren nach Anspruch 1, **dadurch gekennzeichnet, dass** das Alkalimischsulfid durch folgende Arbeitsgänge hergestellt wird:
- Mischen von ungefähr gleichen Mengen an NaOH und KOH in Form von wasserfreiem Granulat,
- Zugabe von Schwefelblüte zum Gemisch in einem Anteil von 5 bis 10 Gew.-%,
- Mischen bis zum Festhaften des Schwefels auf dem Granulat und
- Zugabe von Wasser zum Gemisch in einem Mengenanteil von 3 bis 20 % zur Erzielung einer exothermen Reaktion und Lösen des Granulats.

3. Verfahren nach Anspruch 2, **dadurch gekennzeichnet, dass** das erhaltene Gemisch im 1- bis 3fachen Volumen Wasser gelöst wird.

4. Verfahren nach einem der Ansprüche 1 bis 3, **dadurch gekennzeichnet, dass** man die Vorgänge des Mischens der Masse unter Einwirkung von Ultraschall durchführt.

5. Verfahren nach einem der Ansprüche 1 bis 4, **dadurch gekennzeichnet, dass** die Extraktion durch Zentrifugieren mit Hilfe eines Abscheiders durchgeführt wird.

6. Verfahren nach Anspruch 5, **dadurch gekennzeichnet, dass** die Festphase dann in Pulverform einem Plasmareaktor in Anwesenheit eines Gases, ausgewählt unter Stickstoff und Argon, zugeführt wird, um die organischen Verbindungen zu entfernen und den Gehalt an den Metallen in dieser Phase zu vermindern.

7. Verfahren nach einem der Ansprüche 5 oder 6, **dadurch gekennzeichnet, dass** der Flüssigphase NH₄OH zugesetzt wird, um aus Metallchloriden, welche die Flüssigphase enthält, Metallhydroxide zu bilden, wobei diese Hydroxide dann durch Zentrifugieren abgeschieden werden.

## Claims

1. Method for purifying sludge, suspected of containing heavy, toxic and/or precious metals in order to extract them, suspended in an aqueous solution and together forming a mass to be treated, **characterised in that** it includes the following steps:
• mixing FeC13 with the mass, until an acidic pH of the solution is obtained,
• mixing (CO2H)2 and NH4Cl with the mass until metal pro-chelates are formed,
• mixing mixed alkali sulphides with the mass until a solution with a very basic pH is obtained, to form colloidal complex iron chelates, which trap said metals,
• neutralising the solution by adding an acid, until alkaline-ferrous sulphides and hydroxides containing said metals are precipitated,
• forming by centrifuging, from the mass, a liquid phase and a solid phase, said solid phase containing said alkaline-ferrous sulphides.

2. Method according to claim 1, **characterised in** the said mixed alkaline-sulphide is made from the following steps :
• mixing NaOH and KOH in substantially equal quantities in the form of anhydrous granules,
• adding flowers of sulphur to the mixture, in a proportion comprised between 5 and 10% by weight,
• mixing until the sulphur adheres to the granules,
• adding water to the mixture in a proportion comprised between 3 and 20% until an exothermic reaction is obtained and the granules are dissolved.

3. Method according to claim 2, **characterised in that** the mixture obtained is dissolved in 1 to 3 times its volume of water.

4. Method according to any of claims 1 to 3, **characterised in that** the steps of mixing said mass are carried out in the presence of ultrasounds.

5. Method according to any of claims 1 to 4, **characterised in that** extraction by centrifuging is carried out by means of a centrifugal separator and settling tank.

6. Method according to claim 5, **characterised in that** said solid phase is then introduced in powder form into a plasma reactor, in the presence of a gas chosen from nitrogen and argon, to eliminate the organic compounds and reduce the metals contained in said phase.

7. Method according to claims 5 or 6, **characterised in that** NH4OH is added to said liquid phase to form metal hydroxides from the metal chlorides contained in said liquid phase, said hydroxides being then extracted by centrifugation.
